# EUROPÄISCHE PATENTSCHRIFT

(11) **EP 2 527 067 B1**
(45) Veröffentlichungstag und Bekanntmachung des Hinweises auf die Patenterteilung: **27.08.2014**
(21) Anmeldenummer: 11004233.0
(22) Anmeldetag: 23.05.2011
(51) Int. Cl.: B23D 36/00

(54) **Aufteilanlage zum Zersägen von zumindest einem platten- oder blockförmigen Werkstück**
Partitioning facility for sawing at least one panel or block shaped workpiece.
Dispositif de séparation pour le sciage d'au moins une pièce en forme de plaque ou de block.

(43) Veröffentlichungstag der Anmeldung: 28.11.2012
(73) Patentinhaber: Schelling Anlagenbau GmbH, 6858 Schwarzach (AT)
(72) Erfinder: Walch, Alexander, 6850 Dornbirn (AT); Klagian, Dietmar, 6911 Lochau (AT); Fink, Florian, 6850 Dornbirn (AT)
(74) Vertreter: Fechner, Thomas

(56) Entgegenhaltungen:
- EP-A2- 1 136 164
- AT-A1- 506 146
- US-A- 4 044 639
- US-A1- 2003 183 052

## Beschreibung

Die vorliegende Erfindung betrifft eine Aufteilanlage gemäß Oberbegriff des Anspruchs 1. Des Weiteren betrifft die Erfindung auch ein Verfahren gemäß Oberbegriff des Anspruchs 7. Eine Aufteilanlage und ein Verfahren zum Besäumen sind in US 2003/0183052 A1 offenbart.

Mittels Aufteilanlagen werden großformatige rohe platten- oder blockförmige Werkstücke einem vorgegebenen Schnittplan folgend in kleinere Formate zersägt. Üblicherweise können dabei die Außenkanten bzw. Stirnseiten des rohen bzw. unzersägten Werkstücks nicht für die zersägten Formate verwendet werden, da sie eine zu geringe Qualität, insbesondere eine zu unebene Oberfläche aufweisen. Die rohen Werkstücke werden daher entsprechend besäumt, um die gewünschte Qualität der Außenkanten bzw. Stirnflächen des Werkstücks bereitstellen zu können. Außerdem unterliegt in der Praxis die tatsächliche Größe des rohen Werkstücks gewissen Schwankungen gegenüber den Sollmaßen bzw. theoretischen Abmessungen, die für die Berechnung des Schnittplanes verwendet werden. Ausprägungen dieser Schwankungen sind alle Formen von Abweichungen wie Maßfehler, Winkelfehler, krumme Kanten, unebene Stirnflächen und alle Kombinationen daraus.

Insbesondere bei der Verarbeitung von teuren Materialien wie z.B. Kunststoffen oder Metallen wie Aluminium, Kupfer oder anderen Buntmetallen, ist es üblich, das Werkstück oder ein Paket von Werkstücken vor dem eigentlichen Zersägen in die Formate nur in einem möglichst geringen Umfang mittels eines sogenannten Staubschnittes zu besäumen. Die Breite von Staubschnitten ist schmäler als oder gleich wie die Schnittbreite der Sägeeinrichtung.

Ein unangenehmer Nebeneffekt bei der Durchführung der Besäumung und insbesondere der Staubschnitte sind die frei herumwirbelnden Späne, welche entstehen, weil die Sägeeinrichtung nur mit einer ihrer Seiten am Werkstück anliegt. Als Lösung für dieses Problem wird in der AT 506 146 A1 eine, in einen beim Sägevorgang auf das Werkstück aufzudrückenden Druckbalken integrierte Absaugung vorgeschlagen.

Wenn die Summe der beschriebenen Abweichungen des rohen Werkstücks größer als die Schnittbreite der Sägeeinrichtung ist, so können beim Besäumschnitt sehr ungünstige, dünne und insbesondere keilförmige und/oder spitz zulaufende Abfälle, sogenannte Spreißel entstehen. Diese Abfälle werden im Folgenden als Reststreifen bezeichnet. Wenn sich diese Reststreifen im Sägekanal des Maschinentisches verhaken oder durch diesen auf die Sägeeinrichtung fallen, können sie eine Gefahr so-wohl für das Bedienpersonal als auch für die Aufteilanlage darstellen. Es besteht insbesondere die Gefahr, dass in diesen Fällen die Reststreifen von der Sägeeinrichtung beschleunigt und unkontrolliert in der Umgebung der Aufteilanlage herumfliegen, wodurch sowohl das Bedienpersonal als auch die Aufteilanlage selbst zu Schaden kommen können.

Zusätzlich ungünstig ist es dabei, dass die Toleranzfelder der rohen Werkstücke üblicherweise positiv sind, d.h. die Werkstücke ein Übermaß gegenüber den theoretischen Abmessungen aufweisen. Je ungenauer sie sind, desto größer ist das Übermaß.

In der AT 403 263 B wird eine Einheit zur Abdeckung des Sägekanals gezeigt, bei der der Sägekanal durch eine Reihe von verschiebbaren Riegeln in den Bereichen verschlossen wird, in denen sich die Sägeeinrichtung bei Durchführung des Sägevorgangs momentan nicht befindet. Diese Einrichtung ist aber mechanisch sehr auf-wendig und beherrscht das oben genannte Problem nur bei relativ langen Reststreifen. Zusätzlich wird durch die Nuten zur Aufnahme der Riegel die Auflageoberfläche des Maschinentisches unterbrochen. Dies wirkt sich negativ auf die Schnitt- bzw. Sägequalität aus. Je kürzer die Reststreifen sind, umso höher ist die Anzahl der benötigten Riegel, umso mehr verstärken sich aber auch die genannten Nachteile, Aufgabe der Erfindung ist es, eine Lösung für das oben genannte Problem mit den beim Besäumen auftretenden Reststreifen vorzuschlagen.

Zur Lösung dieser Aufgabe sieht die Erfindung eine Aufteilanlage gemäß Patentanspruch 1 vor.

Es ist somit Intention der Erfindung, die Entstehung von ungünstigen bzw. gefährlichen Reststreifen von vornherein vermeiden zu können. Dazu wird das Werkstück erfindungsgemäß vor Durchführung der Besäumschnitte von der Aufteilanlage vermessen und zwar die Länge des Werkstücks in Vorschubrichtung. Dies ermöglicht es, dann unter Einbeziehung des Schnittplans von der Regeleinrichtung die tatsächlich zu erwartende Größe der beim Besäumen von dem Werkstück abzutrennenden Reststreifen vorab zu errechnen. Je nach Größe dieser zu erwartenden Reststreifen kann dann automatisch der effizienteste von mehreren vorprogrammierten bzw. vorgegebenen Besäumabläufen gewählt werden. Die Art der Besäumung kann dann so ausgewählt werden, dass die Entstehung von Reststreifen mit kritischen Dimensionen von vorn herein vermieden wird. Hierdurch kann sichergestellt werden, dass beim Besäumen nur so große Reststreifen entstehen, bei welchen die oben genannten Gefahrensituationen nicht mehr eintreten können, insbesondere da sie nicht mehr in den Schnittkanal hineinpassen.

Bevorzugt ist vorgesehen, dass ein Mindestmaß der Größe des Abfalls bzw. Reststreifens bzw. eine Mindestbreite des Reststreifens definiert wird, bis zu der die entstehenden Reststreifen als kritisch eingestuft werden. Dies bedeutet dann, dass Reststreifen, welche kleiner als die Mindestbreite sind, generell vermieden werden können. Als Basis für die Festlegung der Mindestbreite wird günstigerweise die Breite des Schnittkanals im Maschinentisch plus einem Sicherheitszuschlag gewählt. Diese Wahl ist darin begründet, dass Reststreifen dann als sehr ungünstig bzw. gefährlich eingestuft werden, wenn sie durch den Schnittkanal auf die Sägeeinrichtung fallen bzw. sich im Schnittkanal verklemmen können. Ein typischer Wert für die Schnittbreite des Sägekanals liegt, um ein Beispiel zu nennen, bei 7mm. Hier kann z.B. ein Sicherheitszuschlag von 2mm hinzugenommen werden, was in Summe eine Mindestbreite des Reststreifens von 9mm ergibt. In diesem Beispiel wären dann alle Reststreifen mit einer Breite kleiner 9mm zu vermeiden.

Bei einer ersten Gruppe von Ausgestaltungsformen der Erfindung ist vorgesehen, dass die Aufteilanlage bzw. deren Regeleinrichtung vollautomatisch auf die mittels Längenmesseinrichtung bestimmten Längen reagiert. Bei diesen Ausgestaltungsformen ist es dann günstig, wenn die Regeleinrichtung die Sägeeinrichtung und die Vorschubeinrichtung zur Durchführung zumindest eines Besäumschnittes in Abhängigkeit der von der Längenmesseinrichtung bestimmten Länge ansteuert.

Es ist aber auch eine halbautomatische Vorgehensweise denkbar. In diesem Fall weist die Aufteilanlage günstigerweise eine Ausgabeeinheit auf und die Regeleinrichtung gibt in Abhängigkeit der von der Längenmesseinrichtung bestimmten Länge über die Ausgabeeinheit zumindest einen Vorschlag zur Durchführung zumindest eines Besäumschnittes aus. Das Bedienpersonal kann dann entscheiden, ob es diesem Vorschlag folgt oder nicht. Es können auch gemischte Varianten dieser beiden Prozesse realisiert werden, indem die Regeleinrichtung zunächst den genannten Vorschlag über die Ausgabeeinheit ausgibt und dann bei Bestätigung seitens des Bedienpersonals die Sägeeinrichtung und die Vorschubeinrichtung zur Durchführung des zumindest einen Besäumschnittes in Abhängigkeit der von der Längenmesseinrichtung bestimmten Länge automatisch ansteuert.

Als Ausgabeeinheit kann z.B. ein Bildschirm, ein Lautsprecher oder dergleichen, also beim Stand der Technik bekannte Mittel eingesetzt werden. Die Längenmesseinrichtung ist, in Vorschubrichtung gesehen, günstigerweise vor oder maximal bis zum Sägekanal reichend angeordnet. Sie kann in unterschiedlichsten Ausgestaltungsformen ausgeführt sein. Eine bevorzugte Variante sieht dabei z.B. vor, dass die Längenmesseinrichtung eine Positionsbestimmungseinrichtung zur Bestimmung der Position der Vorschubeinrichtung in Vorschubrichtung und zumindest eine Erkennungseinrichtung zur Bestimmung der Position eines von der Vorschubeinrichtung abgewandten, vorderen Endes des Werkstücks in Vorschubrichtung aufweist. Mit anderen Worten ist dabei vorgesehen, dass die Erkennungseinrichtung erkennt, wenn das von der Vorschubeinrichtung abgewandte, vordere Ende des Werkstücks die Erkennungseinrichtung bzw. deren Position erreicht. Zu diesem Zeitpunkt wird dann mittels der Positionsbestimmungseinrichtung die Position der Vorschubeinrichtung bzw. einer Anschlagfläche der Vorschubeinrichtung, mit der diese am Werkstück anliegt, bestimmt. Aus diesen beiden, in Richtung der Vorschubrichtung bestimmten Positionen kann dann die Länge des Werkstücks bestimmt bzw. berechnet werden. Die Erkennungseinrichtung kann dabei, in Vorschubrichtung gesehen, ortsfest angeordnet sein. Bevorzugt sind Positionen der Erkennungseinrichtung im oder, in Vorschubrichtung gesehen, vor dem Sägekanal. Als Erkennungseinrichtung kann z.B. ein an sich bekannter, vorzugsweise basierend auf dem Reflektionsprinzip funktionierender, Lichtsensor verwendet werden.

Ein erfindungsgemäßes Verfahren zum Besäumen zumindest eines platten- oder blockförmigen Werkstücks mittels einer erfindungsgemäßen Aufteilanlage ist in Patentanspruch 7 festgehalten. Hierbei kann dann wiederum vorgesehen sein, dass zur Durchführung des Besäumschnitts die Sägeeinrichtung und die Vorschubeinrichtung von einer Regeleinrichtung der Aufteilanlage in Abhängigkeit der mittels der Längenmesseinrichtung bestimmten Länge angesteuert werden. Eine Alternative besteht wiederum darin, dass von einer Regeleinrichtung der Aufteilanlage in Abhängigkeit der von der Längenmesseinrichtung bestimmten Länge auf einer Ausgabeeinheit der Aufteilanlage zumindest ein Vorschlag zur Durchführung des Besäumschnittes ausgegeben wird. Die beiden Verfahrensvarianten können aber auch, z.B. in der eingangs bezüglich der Aufteilanlage bereits erläuternden Art und Weise, miteinander verbunden werden. Günstigerweise wird das erfindungsgemäße Verfahren auf einer erfindungsgemäßen Aufteilanlage durchgeführt.

Bevorzugte Varianten des erfindungsgemäßen Verfahrens sehen vor, dass von einer Regeleinrichtung der Aufteilanlage eine Differenz zwischen der mittels der Längenmesseinrichtung bestimmten Länge und einer vorgegebenen, mit der Besäumung in Vorschubrichtung zu erreichenden Solllänge des Werkstücks gebildet wird und die Art der Besäumung in Abhängigkeit der Differenz durchgeführt oder vorgeschlagen wird. Die Solllänge ergibt sich dabei in der Regel aus dem Schnittplan, nach dem das Werkstück in die einzelnen Formate zersägt werden soll.

Welche Art der Besäumung nun gewählt wird, wird günstigerweise anhand der ermittelten Differenzen entschieden. So kann z.B. vorgesehen sein, dass zur Besäumung des Werkstücks ausschließlich Staubschnitte, deren Breite kleiner als eine Schnittbreite der Sägeeinrichtung ist, durchgeführt oder vorgeschlagen werden, wenn die Differenz kleiner oder gleich einem vorgebbaren Mindestmaß ist. Wenn die Differenz kleiner oder gleich der doppelten Schnittbreite der Sägeeinrichtung ist, kann z.B. vorgesehen sein, dass genau ein Staubschnitt am von der Vorschubeinrichtung abgewandten, vorderen Ende des Werkstücks und genau ein Staubschnitt am der Vorschubeinrichtung zugewandten hinteren Ende des Werkstücks durchgeführt oder vorgeschlagen werden. Ist die in der oben genannten Art und Weise ermittelte Differenz größer als die doppelte Schnittbreite aber kleiner als die Summe aus der doppelten Schnittbreite der Sägeeinrichtung und einer vorgebbaren Mindestbreite eines Reststreifens, so kann vorgesehen sein, dass mehrere Staubschnitte am, von der Vorschubeinrichtung abgewandten, vorderen Ende des Werkstücks und genau ein Staubschnitt am der Vorschubeinrichtung zugewandten hinteren Ende des Werkstücks durchgeführt oder vorgeschlagen werden. Natürlich können auch mehrere Staubschnitte am hinteren Ende und nur ein Staubschnitt am vorderen Ende oder mehrere Staubschnitte an beiden Enden durchgeführt werden. Ist die Differenz allerdings größer als ein vorgebbares Mindestmaß so kann auch vorgesehen sein, dass zur Besäumung des Werkstücks dann das Absägen zumindest eines Reststreifens vom Werkstück durchgeführt oder vorgeschlagen wird. Insbesondere kann vorgesehen sein, dass am, von der Vorschubeinrichtung abgewandten, vorderen Ende des Werkstücks das Absägen zumindest eines Reststreifens vom Werkstück und am, der Vorschubeinrichtung zugewandten, hinteren Ende des Werkstücks genau ein Staubschnitt durchgeführt oder vorgeschlagen werden, wenn die Differenz größer als die oder gleich der Summe aus der doppelten Schnittbreite der Sägeeinrichtung und einer vorgebbaren Mindestbreite eines Reststreifens ist. Natürlich können auch in diesem Fall der Staubschnitt am vorderen Ende und das Absägen des zumindest einen Reststreifens am hinteren Ende des Werkstücks durchgeführt werden. Auch mehrere Staubschnitte an einem der beiden Enden sind möglich.

Der Vollständigkeit halber wird noch einmal darauf hingewiesen, dass ein Besäumschnitt ein Sägevorgang ist, bei dem eine Stirnseite bzw. ein Rand des Werkstücks in der Form begradigt wird, dass sie die benötigte Qualität bzw. Geometrie aufweist. Im Sinne der Vermeidung von Materialverlusten wird dabei immer so wenig wie möglich vom Werkstück abgesägt. Ein Besäumschnitt kann als Staubschnitt ausgeführt werden. Dies ist dann der Fall, wenn die Breite des Besäumschnittes kleiner als die Schnittbreite der Sägeeinrichtung ist. Ein Besäumschnitt kann aber auch ausgeführt werden, indem ein Reststreifen vom Werkstück abgesägt wird. Der Vollständigkeit halber sei noch darauf hingewiesen, dass die Erfindung nicht nur mit einzelnen Werkstücken, sondern auch mit Werkstückstapeln durchgeführt werden kann.

Weitere Merkmale und Einzelheiten der bevorzugten Ausgestaltungsformen der Erfindung ergeben sich aus der nachfolgenden Figurenbeschreibung. Es zeigen:
- Fig. 1: schematisiert eine Draufsicht auf ein noch zu besäumendes Werkstück;
- Fig. 2: eine Frontalansicht auf eine erfindungsgemäße Aufteilanlage in Gegenrichtung zur Vorschubrichtung;
- Fig. 3: eine Draufsicht auf die Aufteilanlage gemäß Fig. 2;
- Fig. 4: eine den Fig. 2 und 3 zugeordnete Seitenansicht;
- Fig. 5: den Teilbereich A aus Fig. 4.

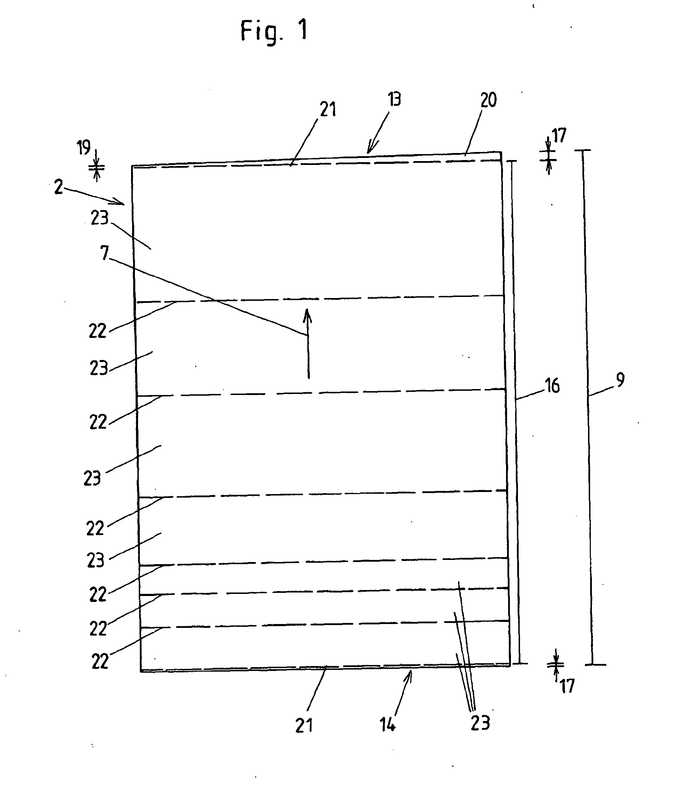

Fig. 1 zeigt, wie gesagt, eine Draufsicht auf ein noch in die Formate 23 zu zersägendes Werkstück 2. Die Aufteilung in die Formate 23 erfolgt entlang der Trennschnitte 22.

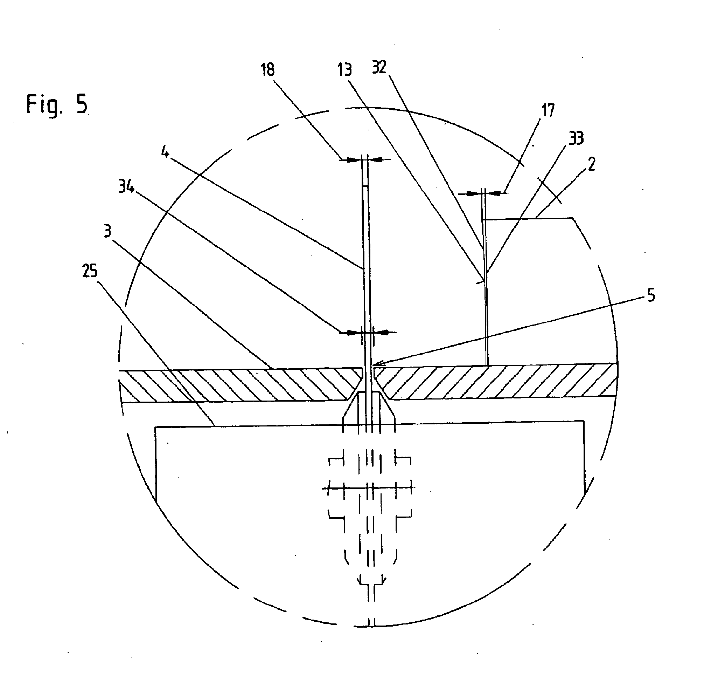

Bevor dies geschieht, muss aber noch vorab die Besäumung vorgenommen werden, damit am in der Vorschubrichtung 7 gesehen, vorderen Ende 13 und hinteren Ende 14 des Werkstücks 2 Außenränder bzw. Stirnflächen vorhanden sind, die den Qualitätsanforderungen an die Formate 23 entsprechen. Um die Solllänge 16, welche sich aus dem jeweiligen Schnittplan ergibt, zu erreichen, muss das sogenannte rohe Werkstück 2 mit der Länge 9 mittels entsprechender Besäumschnitte 21 am vorderen Ende 13 und am hinteren Ende 14 besäumt werden. Im beispielhaft dargestellten Fall der Fig. 1 muss hierzu am vorderen Ende 13 des Werkstücks 2 ein Reststreifen 20 mittels des entsprechenden Besäumschnittes 21 abgesägt werden, am hinteren Ende 14 des Werkstücks 2 reicht ein Staubschnitt als Besäumschnitt 21. Die Breite des Staubschnittes ist geringer als die in Fig. 5 dargestellte Schnittbreite 18 der Sägeeinrichtung 4. Die Differenz 17 zwischen der Länge 9 des rohen, also vor der Besäumung vorliegenden Werkstücks 2 und seiner Solllänge 16 gemäß Schnittplan, ist an beiden Enden des Werkstücks 2 eingezeichnet, die Summe dieser beiden Differenzen ergibt die Gesamtdifferenz, welche im Folgenden einfach als Differenz 17 bezeichnet wird.

Wo und an wie vielen Stellen, in einer Richtung quer zur Vorschubrichtung 7 gesehen, die Länge 9 bestimmt wird, kann variiert werden und ist abhängig von der zu erwartenden Qualität des noch nicht besäumten Werkstücks. Es kann eine einzige Messung der Länge 9 ausreichen, um die Besäumung in der erfindungsgemäßen Art und Weise vorzunehmen. Bei sehr undefinierten Geometrien des noch nicht besäumten Werkstücks 2 kann aber auch die Bestimmung der Länge 9 an mehreren quer zur Vorschubrichtung 7 voneinander distanzierten Positionen notwendig sein. Die Länge 9 wird jedenfalls immer in Richtung der Vorschubrichtung 7 an diesbezüglich gegenüberliegenden Enden 13 und 14 des Werkstücks 2 bestimmt.

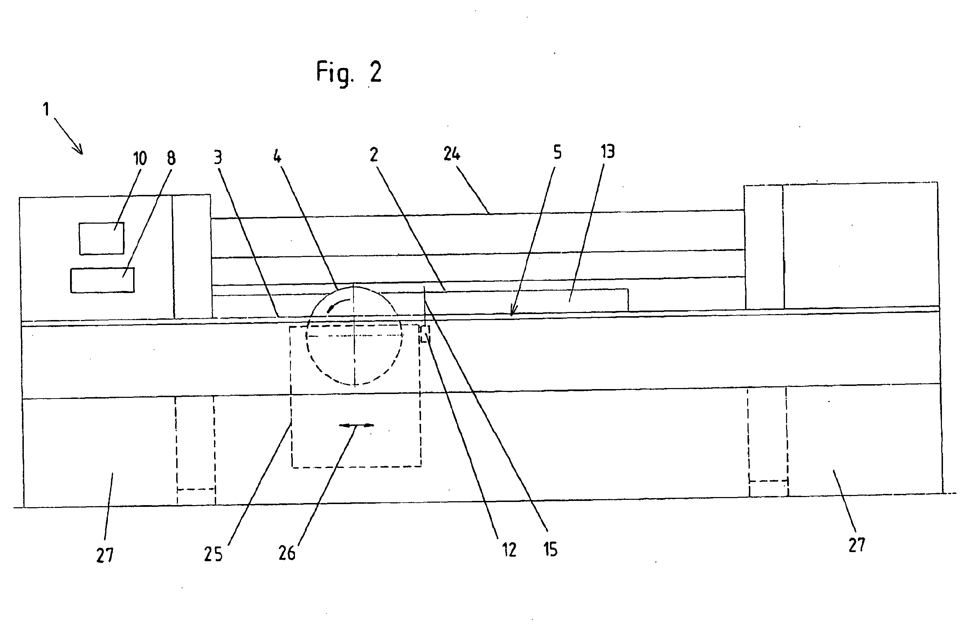

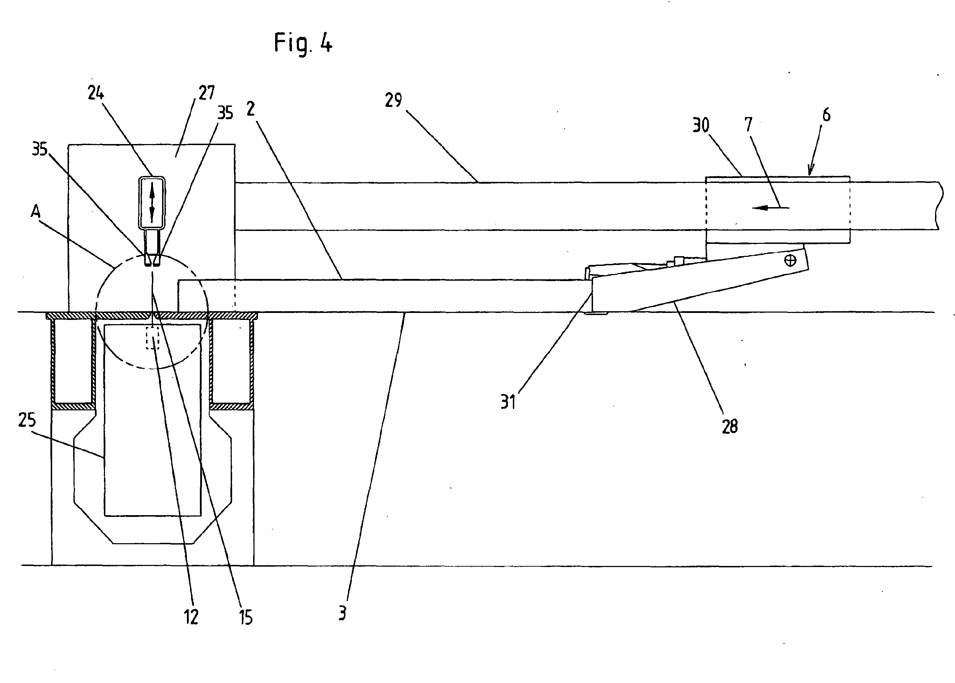

In den Fig. 2 bis 5 ist nun eine erfindungsgemäße Aufteilanlage 1 dargestellt, mit der auch das erfindungsgemäße Verfahren durchgeführt werden kann. Diese weist allerdings auch zahlreiche an sich bekannte Merkmale auf, die nun vorab kurz beispielhaft erläutert werden sollen. Die Aufteilanlage 1 weist einen Maschinentisch 3 auf, auf dem die zu zersägenden Werkstücke 2 beim Sägevorgang aufgelegt sind. Bei den Werkstücken 2 kann es sich um Platten, Blöcke, Plattenstapel, Blockstapel oder dergleichen handeln. Der Maschinentisch 3 ist von Ständern 27 getragen. Diese Ständer 27 tragen auch einen an sich bekannten Druckbalken 24, welcher auf das Werkstück 2 abgesenkt werden kann, um dieses beim Sägevorgang auf den Maschinentisch 3 zu drücken. Der Druckbalken 24 befindet sich günstigerweise, in Vorschubrichtung 7 gesehen, im Bereich des Sägekanals 5. Wie besonders gut in den Fig. 4 und 5 zu sehen, kann vorgesehen sein, dass die hier als Kreissägeblatt ausgebildete Sägeeinrichtung 4 bei abgesenktem Druckbalken 24 zwischen zwei Seitenschenkeln 35 des Druckbalkens 24 angeordnet ist. In den Druckbalken 24 kann auch eine an sich bekannte Absaugvorrichtung integriert sein. Der Druckbalken 24 ist in den in Fig. 4 in Form des Doppelpfeils gezeigten Richtungen auf den Maschinentisches 3 absenkbar bzw. von diesem wieder abhebbar.

Bei der Sägeeinrichtung 4 kann es sich, wie hier gezeigt, um ein Kreissägeblatt handeln, welches bevorzugt unter den Maschinentisch absenkbar und zumindest bereichsweise über den Maschinentisch anhebbar ist. Im abgesenkten Zustand kann die Sägeeinrichtung entlang des Sägekanals 5 verfahren werden, ohne dass sie über den Maschinentisch 3 übersteht bzw. aus dem Sägekanal 5 herausschaut. Zum Zersägen des Werkstücks 2 ist die Sägeeinrichtung 4 in einer angehobenen Position, in der sie das Werkstück entlang des Sägekanals 5 durchtrennen kann, angeordnet und schaut aus dem Sägekanal 5 heraus. Der Sägekanal 5 ist günstigerweise linear verlaufend ausgebildet. Die Sägeeinrichtung 4 kann bevorzugt mittels eines an sich bekannten Sägewagens 25 entlang des Sägekanals 5 in den Verfahrrichtungen 26 quer zur Vorschubrichtung 7 verfahren werden.

Anstelle der hier dargestellten sogenannten Unterflurkreissäge können auch andere Sägeeinrichtungen 4, wie sie beim Stand der Technik bekannt sind, zum Einsatz kommen.

In die Aufteilanlage 1 ist eine hier nur schematisch dargestellte Regeleinrichtung 8 integriert, welche günstigerweise die gesamte Aufteilanlage 1 steuert und regelt. Insbesondere ist vorgesehen, dass die Regeleinrichtung 8 sowohl die Vorschubeinrichtung 6 als auch die Sägeeinrichtung 4 samt Sägewagen 25 ansteuert. Mit dem Bezugszeichen 10 ist eine Ausgabeeinheit z.B. in Form eines Bildschirms oder eines Lautsprechers dargestellt, über die die Regeleinrichtung 8 Informationen an das Bedienpersonal ausgeben kann. In der Regel ist noch eine Eingabeeinheit, welche hier nicht dargestellt ist, vorhanden, mit der das Bedienpersonal Befehle, Parameter oder dergleichen in die Regeleinrichtung 8 eingeben kann. Die grundsätzliche Ausgestaltung von Regeleinrichtung 8, Ausgabeeinheit 10 und Eingabeeinheit sind an sich bekannt und müssen nicht noch einmal erläutert werden.

Aufbau und Funktion der an sich bekannten Vorschubeinrichtung 6 sind besonders gut in der Seitenansicht gemäß Fig. 4 zu erkennen. An zwei parallel zur Vorschubrichtung 7 angeordneten Führungsträgern 29 ist im gezeigten Ausführungsbeispiel ein Einschubwagen 30 in Vorschubrichtung 7 und in der Gegenrichtung verfahrbar. Am Einschubwagen 30 sind an sich bekannte Klemmer 28 der Vorschubeinrichtung 6 befestigt. Mit diesen kann das Werkstück 2 gegriffen werden, um in Vorschubrichtung 7 zum Sägekanal 5 und/oder in der Gegenrichtung transportiert zu werden. Im gezeigten Ausführungsbeispiel sind die Anschlagflächen 31, mit denen die Vorschubeinrichtung 6 am Werkstück 2 anliegt, entsprechende Flächen der Klemmer 28. Die Klemmer 28 können wie im hier gezeigten Ausführungsbeispiel heb- und senkbar sein. In der abgesenkten, in Fig. 4 dargestellten Arbeitsposition können sie das Werkstück 2 greifen und bewegen. In der angehobenen, hier nicht dargestellten Position, können sie über ein auf dem Maschinentisch 3 aufliegendes Werkstück 2 in Vorschubrichtung 7 und in Gegenrichtung hin und her gefahren werden.

Fig. 5 zeigt den Bereich A aus Fig. 4 vergrößert. Zu sehen ist die über die Auflageebenen des Maschinentisches 3 angehobene Sägeeinrichtung 4. Deren Schnittbreite ist mit dem Bezugszeichen 18 bezeichnet. Die Sägeeinrichtung 4 tritt durch den im Maschinentisch 3 vorgesehenen Sägekanal 5 hindurch und wird in den in Fig. 2 eingezeichneten Richtungen 26 entlang des Sägekanals 5 verfahren. Die Sägekanalbreite des Sägekanals 5 ist in Fig. 5 eingezeichnet und mit dem Bezugszeichen 34 versehen. In Fig. 5 ist auf der rechten Seite ein noch nicht besäumtes bzw. rohes Werkstück 2 mit einer krummen Stirnfläche 32 beispielhaft dargestellt. Die mittels Besäumschnitt 21 herzustellende gerade besäumte Stirnfläche 33 ist in Fig. 5 ebenfalls eingezeichnet. 17 bezeichnet hier die Differenz der Materialstärke, welche mittels Besäumschnitt 21 entfernt werden muss. Aus dem Vergleich von Schnittbreite 18 und Differenz 17 ergibt sich, dass in diesem, in Fig. 5 dargestellten Beispiel der Besäumschnitt 21 als Staubschnitt durchgeführt werden kann, da die Differenz 17 geringer ist als die Schnittbreite 18 der Sägeeinrichtung 4.

Die bisher geschilderten Merkmale der in den Fig. 2 bis 5 dargestellten Aufteilanlage 1 sind hier nur beispielhaft dargestellt.

Eine zentrale Idee der Erfindung ist nun, dass vor Durchführung des Besäumschnittes 21 bzw. der Besäumschnitte 21 zumindest eine Länge 9 des auf dem Maschinentisch 3 aufliegenden, zu besäumenden Werkstücks 2 in Vorschubrichtung 7 mittels zumindest einer Längenmesseinrichtung bestimmt wird. Die in Fig. 2 bis 5 schematisch dargestellte Aufteilanlage 1 weist hierzu eine entsprechende Längenmesseinrichtung zur Bestimmung der zumindest einen Länge 9 des auf dem Maschinentisch aufliegenden Werkstücks 2 in Vorschubrichtung 7 auf, wobei diese von der Längenmesseinrichtung bestimmte Länge 9 der Regeleinrichtung 8 zuführbar ist. Die Regeleinrichtung 8 kann dann die Sägeeinrichtung 4 und die Vorschubeinrichtung 6 zur Durchführung zumindest eines Besäumschnittes 21 in Abhängigkeit der von der Längenmesseinrichtung bestimmten Länge 9 ansteuern und/oder über die Ausgabeeinheit 10 einen Vorschlag zur Durchführung zumindest eines Besäumschnittes 21 in Abhängigkeit von der bestimmten Länge 9 ausgeben. Durch die genannte Längenmessung kann somit die Art der Besäumung in Abhängigkeit der Differenz 17 zwischen der mittels Längenmesseinrichtung bestimmten Länge 9 und der vorgegebenen Solllänge 16, beide sind in Vorschubrichtung 7 bestimmt, von der Regeleinrichtung 8 festgelegt werden. Alternativ kann die Regeleinrichtung 8 eben einen entsprechenden Vorschlag über die Ausgabeeinheit 10 an das Bedienpersonal ausgeben.

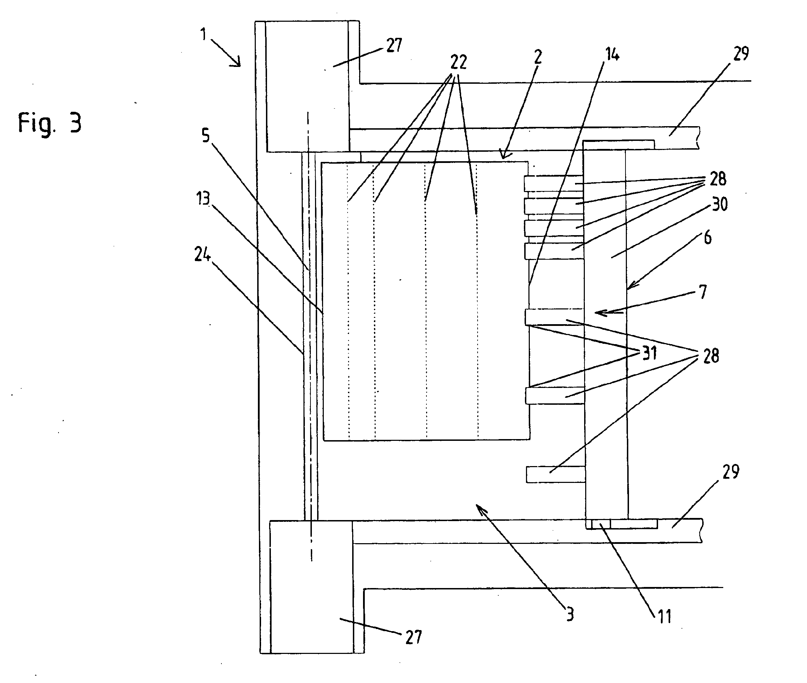

Im gezeigten Ausführungsbeispiel weist die Längenmesseinrichtung einerseits eine Positionsbestimmungseinrichtung 11 zur Bestimmung der Position der Vorschubeinrichtung 6 in Vorschubrichtung 7 auf. Günstigerweise wird von dieser in Fig. 3 nur stark schematisiert dargestellten Positionsbestimmungseinrichtung 11 die Position der Anschlagflächen 31 der Vorschubeinrichtung 6 bestimmt. Diese Position gibt, in Vorschubrichtung 7 gesehen, den Abstand zwischen den Anschlagflächen 31 der Vorschubeinrichtung 6 und dem Sägekanal 5 wieder. Diese Position entspricht der Position des hinteren Endes 14 des Werkstücks 2, wenn dieses mittels der Klemmer 28 gegriffen ist und an deren Anschlägen 31 anliegt. Natürlich kann auch die Position eines anderen Teils der Vorschubeinrichtung 6 bestimmt werden, um dann über bekannte Geometrien die Position der Anschlagfläche 31 zu bestimmen.

Im gezeigten Ausführungsbeispiel wird zur Bestimmung der Position des von der Vorschubeinrichtung 6 abgewandten, vorderen Endes 13 des Werkstücks 2 die Erkennungseinrichtung 12 eingesetzt. Im gezeigten Ausführungsbeispiel handelt es sich dabei um einen, basierend auf dem Reflektionsprinzip funktionierenden Lichtsensor, welcher beim Stand der Technik an sich bekannt ist. Dieser erkennt, wenn das Werkstück von der Vorschubeinrichtung 6 so weit in Vorschubrichtung 7 geschoben wurde, dass es den Lichtstrahl 15 der Erkennungseinrichtung 12 erreicht hat. Exakt zu diesem Zeitpunkt wird mittels der Positionsbestimmungseinrichtung 11 dann die Position der Vorschubeinrichtung 6 bzw. deren Anschläge 31 bestimmt, woraus dann die Länge 9 des Werkstücks 2 in Vorschubrichtung 7 berechnet bzw. bestimmt werden kann. Je nach zu erwartender Qualität des rohen Werkstücks 2 reicht hierzu eine einzige Messung aus. Es können aber auch in Richtung quer zur Vorschubrichtung 7 zueinander versetzte Längen 9 bestimmt werden, falls dies für nötig befunden wird.

Im gezeigten Ausführungsbeispiel ist, wie insbesondere in den Fig. 4 und 2 zu sehen, die Erkennungseinrichtung 12 entlang des Sägekanals 5 verschiebbar angeordnet. Im gezeigten Ausführungsbeispiel ist die Erkennungseinrichtung 12 hierzu am Sägewagen 25 angeordnet. Dies ermöglicht es, die Erkennungseinrichtung 12 in den Verfahrrichtungen 26 quer zur Vorschubrichtung 7 an verschiedenen Stellen anzuordnen, wodurch die Länge 9 in Vorschubrichtung in entsprechend verschiedenen Bereichen des Werkstücks 2 in der bereits geschilderten Art und Weise bestimmt werden kann.

Die Erkennungseinrichtung 12 muss aber nicht zwingend im Sägekanal 5 angeordnet sein. Es könnte auch eine einzelne oder eine Vielzahl von Erkennungseinrichtungen 12 an anderer Stelle im oder über dem Maschinentisch 3, gegebenenfalls stationär, angeordnet sein. Es könnte sich z.B. um eine orthogonal zur Vorschubrichtung 7 angeordnete Reihe von in Querrichtung distanzierten Erkennungseinrichtungen 12 handeln, wodurch die Länge 9 des Werkstücks 2 an mehreren Stellen bestimmt wird.

Eine Messung der Länge 9 wird günstigerweise nur dann ausgelöst, wenn die Vorschubeinrichtung 6 das Werkstück 2 in Vorschubrichtung 7 bewegt, womit sichergestellt ist, dass das Werkstück 2 an den Anschlagflächen 31 anliegt. Werden mehrere Messungen zur Bestimmung der Länge 9 in der genannten Art und Weise vorgenommen, so kann die Parallelität und/oder Geradheit der entsprechenden Kante bzw. des entsprechenden Endes des Werkstücks bestimmt werden.

Mit der minimalen Besäumung wird definiert, wie viel ein Werkstück 2 mindestens besäumt werden muss, damit die Stirnflächen bzw. Ränder entsprechend sauber ausgeführt sind. Dieser Wert kann je nach der Qualität der zu verarbeitenden Werkstücke 2 festgelegt werden. Anhand der Solllängen 16 des Schnittplans und der gemessenen Länge 9 wird die Differenz 17 berechnet. Dann kann geprüft werden, ob ob die minimale Besäumung eingehalten wird. Im Fall, dass die gemessene Größe des rohen Werkstücks 2 Untermaß hat, wird diese Bedingung nicht erfüllt. Der Schnittplan kann dann mit diesem Werkstück 2 nicht den Vorgaben entsprechend abgearbeitet werden. Ist die Differenz 17 ausreichend groß, so sind verschiedene Besäumabläufe möglich:

Ist die Differenz 17 kleiner als zweimal die Schnittbreite 18 der Sägeeinrichtung 4, so kann z.B. jeweils ein Staubschnitt am vorderen Ende 13 und am hinteren Ende 14 des Werkstücks 2 erfolgen. Tritt der Fall ein, dass die Differenz 17 größer oder gleich wie zweimal der Schnittbreite 18 der Sägeeinrichtung 4 ist und kleiner wie eine festzulegende Mindestbreite 19 eines Reststreifens 20 plus zweimal die Schnittbreite 18 der Sägeeinrichtung 4 ist, so können am vorderen Ende 13 so viele aufeinander folgende Staubschnitte erfolgen, bis die tatsächliche Differenz 17 minus einem Staubschnitt zerspant ist. Dieser verbleibende Staubschnitt kann dann am hinteren Ende 14 des Werkstücks 2 erfolgen. Ein Besäumschnitt 21 bei dem ein Reststreifen 20 übrigbleibt, erfolgt günstigerweise nur dann, wenn die Differenz 17 größer oder gleich der vorgebbaren Mindestbreite 19 des Reststreifens 20 plus zweimal der Schnittbreite 18 der Sägeeinrichtung 6 ist. In diesem Fall kann an einem Ende des Werkstücks 2 ein Staubschnitt und am gegenüberliegenden Ende ein Besäumschnitt zum Absägen des Reststreifens 20 durchgeführt werden. Dieser Reststreifen hat dann eine Breite, welche größer oder gleich der Mindestbreite 19 ist. Die Mindestbreite 19 wird so festgelegt, dass es zu keiner Gefährdung des Bedienpersonals und der Maschine kommen kann. Insbesondere sollte die Mindestbreite 19 so bestimmt werden, dass sie größer als die Sägekanalbreite 34 plus dem eingangs bereits erwähnten Sicherheitszuschlag ist. Dies verhindert insbesondere, dass der beim Besäumen erzeugte Reststreifen 20 in den Sägekanal 5 hineinfallen oder sich in diesem verklemmen kann. Bei entsprechend großen Differenzen 17 können natürlich auch sowohl am vorderen als auch am hinteren Ende 13 und 14 des Werkstücks 2 entsprechend große Reststreifen 20 abgetrennt werden, sofern diese die Mindestbreite 19 aufweisen. Diese Vorgehensweise hat den Vorteil, dass Besäumschnitte 21 mit Reststreifen 20 üblicherweise mit höheren Vorschubgeschwindigkeiten der Sägeeinrichtung 4 ausgeführt werden können, als Staubschnitte. Rein zur Vermeidung von Reststreifen 20 mit kritischen Größen betrachtet, wäre dieser Ablauf nicht nötig.

Grundsätzlich ist darauf hinzuweisen, dass weitere erfindungsgemäße Abläufe denkbar sind, z.B. wenn nur am vorderen oder nur am hinteren Ende 13, 14 des Werkstücks 2 ein Besäumschnitt 21 durchgeführt werden soll. Auch in diesen Fällen gilt aber stets die Regel, dass Reststreifen 20, sofern sie entstehen, immer eine Breite größer der Mindestbreite 19 aufweisen sollen.

Abschließend sei noch darauf hingewiesen, dass für verschiedene Enden des Werkstücks 2 auch verschieden große Werte für die minimale Besäumung angegeben werden können.

### Legende

### zu den Hinweisziffern:

- 1: Aufteilanlage
- 2: Werkstück
- 3: Maschinentisch
- 4: Sägeeinrichtung
- 5: Sägekanal
- 6: Vorschubeinrichtung
- 7: Vorschubrichtung
- 8: Regeleinrichtung
- 9: Länge
- 10: Ausgabeeinheit
- 11: Positionsbestimmungseinrichtung
- 12: Erkennungseinrichtung
- 13: vorderes Ende
- 14: hinteres Ende
- 15: Lichtstrahl
- 16: Solllänge
- 17: Differenz
- 18: Schnittbreite
- 19: Mindestbreite
- 20: Reststreifen
- 21: Besäumschnitt
- 22: Trennschnitt
- 23: Format
- 24: Druckbalken
- 25: Sägewagen
- 26: Verfahrrichtungen
- 27: Ständer

- 28: Klemmer
- 29: Führungsträger
- 30: Einschubwagen
- 31: Anschlagfläche
- 32: krumme Stirnfläche
- 33: besäumte Stirnfläche
- 34: Sägekanalbreite
- 35: Seitenschenkel

## Patentansprüche

1. Aufteilanlage (1) zum Zersägen von zumindest einem platten- oder blockförmigen Werkstück (2), welche zumindest einen Maschinentisch (3) zum Auflegen des zu zersägenden Werkstücks (2) auf den Maschinentisch (3) und zumindest eine Sägeeinrichtung (4) aufweist, wobei die Aufteilanlage (1) zumindest eine Vorschubeinrichtung (6) zum Transport des Werkstücks (2) auf dem Maschinentisch (3) in einer Vorschubrichtung (7) und zumindest eine Regeleinrichtung (8) zur Ansteuerung der Sägeeinrichtung (4) und der Vorschubeinrichtung (6) aufweist, wobei die Aufteilanlage (1) zumindest eine Längenmesseinrichtung zur Bestimmung von zumindest einer Länge (9) des auf dem Maschinentisch (3) aufliegenden Werkstücks (2) in Vorschubrichtung (7) aufweist, wobei die von der Längenmesseinrichtung bestimmte Länge (9) der Regeleinrichtung (8) zuführbar ist, **dadurch gekennzeichnet, dass** die Sägeeinrichtung (4) entlang eines im Maschinentisch (3) angeordneten, insbesondere linear verlaufenden, Sägekanals (5) verschiebbar gelagert ist.

2. Aufteilanlage (1) nach Anspruch 1, **dadurch gekennzeichnet, dass** die Regeleinrichtung (8) die Sägeeinrichtung (4) und die Vorschubeinrichtung (6) zur Durchführung zumindest eines Besäumschnittes (21) in Abhängigkeit der von der Längenmesseinrichtung bestimmten Länge (9) ansteuert.

3. Aufteilanlage (1) nach Anspruch 1 oder 2, **dadurch gekennzeichnet, dass** die Aufteilanlage (1) eine Ausgabeeinheit (10) aufweist und die Regeleinrichtung (8) in Abhängigkeit der von der Längenmesseinrichtung bestimmten Länge (9) auf der Ausgabeeinheit (10) zumindest einen Vorschlag zur Durchführung zumindest eines Besäumschnittes (21) ausgibt.

4. Aufteilanlage (1) nach einem der Ansprüche 1 bis 3, **dadurch gekennzeichnet, dass** die Längenmesseinrichtung eine Positionsbestimmungseinrichtung (11) zur Bestimmung der Position der Vorschubeinrichtung (6) in Vorschubrichtung (7) und zumindest eine Erkennungseinrichtung (12) zur Bestimmung der Position eines von der Vorschubeinrichtung (6) abgewandten, vorderen Endes (13) des Werkstücks (2) in Vorschubrichtung (7) aufweist.

5. Aufteilanlage (1) nach Anspruch 4, **dadurch gekennzeichnet, dass** die Erkennungseinrichtung (12), in Vorschubrichtung (7) gesehen, ortsfest, vorzugsweise im oder vor dem Sägekanal (5), angeordnet ist.

6. Aufteilanlage (1) nach Anspruch 4 oder 5, **dadurch gekennzeichnet, dass** die Erkennungseinrichtung (12) ein, vorzugsweise basierend auf dem Reflektionsprinzip funktionierender, Lichtsensor ist.

7. Verfahren zum Besäumen zumindest eines platten- oder blockförmigen Werkstücks (2) mittels einer Aufteilanlage (1) nach einem der Ansprüche 1 bis 6, wobei das zu besäumende Werkstück (2) auf zumindest einem Maschinentisch (3) der Aufteilanlage (1) mittels zumindest einer Vorschubeinrichtung (6) der Aufteilanlage (1) in einer Vorschubrichtung (7) transportiert wird und am Werkstück (2) zumindest ein Besäumschnitt (21) mittels zumindest einer Sägeeinrichtung (4) der Aufteilanlage (1) entlang des Sägekanals (5) durchgeführt wird, wobei vor Durchführung des Besäumschnitts (21) zumindest eine Länge (9) des auf dem Maschinentisch (3) aufliegenden, zu besäumenden Werkstücks (2) in Vorschubrichtung (7) mittels zumindest einer Längenmesseinrichtung bestimmt wird, **dadurch gekennzeichnet, dass** das zu besäumende Werkstück (2) auf dem zumindest einen Maschinentisch (3) der Aufteilanlage (1) mittels der zumindest einen Vorschubeinrichtung (6) der Aufteilanlage (1) in der Vorschubrichtung (7) zu zumindest einem, im Maschinentisch (3) angeordneten Sägekanal (5) transportiert wird.

8. Verfahren nach Anspruch 7, **dadurch gekennzeichnet, dass** zur Durchführung des Besäumschnitts (21) die Sägeeinrichtung (4) und die Vorschubeinrichtung (6) von einer Regeleinrichtung (8) der Aufteilaniage (1) in Abhängigkeit der mittels der Längenmesseinrichtung bestimmten Länge (9) angesteuert werden.

9. Verfahren nach Anspruch 7 oder 8, **dadurch gekennzeichnet, dass** von einer Regeleinrichtung (8) der Aufteilanlage (1) in Abhängigkeit der von der Längenmesseinrichtung bestimmten Länge (9) auf einer Ausgabeeinheit (10) der Aufteilanlage (1) zumindest ein Vorschlag zur Durchführung des Besäumschnittes (21) ausgegeben wird.

10. Verfahren nach einem der Ansprüche 7 bis 9, **dadurch gekennzeichnet, dass** von einer Regeleinrichtung (8) der Aufteilanlage (1) eine Differenz (17) zwischen der mittels der Längenmesseinrichtung bestimmten Länge (9) und einer vorgegebenen, mit der Besäumung in Vorschubrichtung (7) zu erreichenden Solllänge (16) des Werkstücks (2) gebildet wird und die Art der Besäumung in Abhängigkeit der Differenz (17) durchgeführt oder vorgeschlagen wird.

11. Verfahren nach Anspruch 10, **dadurch gekennzeichnet, dass** zur Besäumung des Werkstücks (2) ausschließlich Staubschnitte, deren Breite kleiner als eine Schnittbreite (18) der Sägeeinrichtung (4) ist, durchgeführt oder vorgeschlagen werden, wenn die Differenz (17) kleiner oder gleich einem vorgebbaren Mindestmaß ist.

12. Verfahren nach Anspruch 10 oder 11, **dadurch gekennzeichnet, dass** genau ein Staubschnitt am, von der Vorschubeinrichtung (6) abgewandten, vorderen Ende (13) des Werkstücks (2) und genau ein Staubschnitt, am der Vorschubeinrichtung (6) zugewandten, hinteren Ende (14) des Werkstücks (2) durchgeführt oder vorgeschlagen werden, wenn die Differenz (17) kleiner oder gleich der doppelten Schnittbreite (18) der Sägeeinrichtung (4) ist.

13. Verfahren nach einem der Ansprüche 10 bis 12, **dadurch gekennzeichnet, dass** mehrere Staubschnitte am, von der Vorschubeinrichtung (6) abgewandten, vorderen Ende (13) des Werkstücks (2) und genau ein Staubschnitt, am der Vorschubeinrichtung (6) zugewandten, hinteren Ende (14) des Werkstücks (2) durchgeführt oder vorgeschlagen werden, wenn die Differenz (17) kleiner als die Summe aus der doppelten Schnittbreite (18) der Sägeeinrichtung (4) und einer vorgebbaren Mindestbreite (19) eines Reststreifens (20) ist.

14. Verfahren nach einem der Ansprüche 10 bis 13, **dadurch gekennzeichnet, dass** zur Besäumung des Werkstücks (2) nur dann das Absägen zumindest eines Reststreifens (20) vom Werkstück (2) durchgeführt oder vorgeschlagen wird, wenn die Differenz (17) größer als ein vorgebbares Mindestmaß ist.

15. Verfahren nach einem der Ansprüche 10 bis 14, **dadurch gekennzeichnet, dass** am, von derVorschubeinrichtung (6) abgewandten, vorderen Ende (13) des Werkstücks (2) das Absägen zumindest eines Reststreifens (20) vom Werkstück (2) und am, der Vorschubeinrichtung (6) zugewandten, hinteren Ende (14) des Werkstücks (2) genau ein Staubschnitt durchgeführt oder vorgeschlagen werden, wenn die Differenz (17) größer als die oder gleich der Summe aus der doppelten Schnittbreite der Sägeeinrichtung (4) und einer vorgebbaren Mindestbreite (19) eines Reststreifens (20) ist.

## Claims

1. A dividing-up apparatus (1) for sawing up at least one plate-shaped or block-shaped workpiece (2), having at least one machine table (3) for the placing of the workpiece (2), to be sawn up, on the machine table (3) and at least one sawing device (4), wherein the dividing-up apparatus (1) has at least one feed device (6) for transporting the workpiece (2) on the machine table (3) in a feed direction (7) and at least one regulating device (8) for controlling the sawing device (4) and the feed device (6), wherein the dividing-up apparatus (1) has at least one length measuring device for determining at least one length (9) of the workpiece (2), resting on the machine table (3), in the feed direction (7), wherein the length (9) determined by the length measuring device can be supplied to the regulating device (8), **characterized in that** the sawing device (4) is displaceably mounted along a sawing channel (5) which is arranged in the machine table (3) and in particular runs linearly.

2. A dividing-up apparatus (1) according to claim 1, **characterized in that** the regulating device (8) controls the sawing device (4) and the feed device (6) to execute at least one trimming cut (21) depending on the length (9) determined by the length measuring device.

3. A dividing-up apparatus (1) according to claim 1 or 2, **characterized in that** the dividing-up apparatus (1) has an output unit (10) and, depending on the length (9) determined by the length measuring device, the regulating device (8) outputs on the output unit (10) at least one suggestion for executing at least one trimming cut (21).

4. A dividing-up apparatus (1) according to any one of claims 1 to 3, **characterized in that** the length measuring device has a position determining device (11) for determining the position of the feed device (6) in feed direction (7) and at least one detection device (12) for determining the position of a front end (13), remote from the feed device (6), of the workpiece (2) in feed direction (7).

5. A dividing-up apparatus (1) according to claim 4, **characterized in that** the detection device (12) is, viewed in the feed direction (7), arranged in a fixed manner, preferably in or in front of the sawing chancel (5).

6. A dividing-up apparatus (1) according to claim 4 or 5, **characterized in that** the detection device (12) is an optical sensor, preferably operating based on the reflection principle.

7. A method of trimming at least one plate-shaped or block-shaped workpiece (2) by means of a dividing-up apparatus (1) according to any one of Claims 1 to 6, wherein the workpiece (2) to be trimmed is transported in a feed direction (7) on at least one machine table (3) of the dividing-up apparatus (1) by means of at least one feed device (6) of the dividing-up apparatus (1) and at least one trimming cut (21) is executed on the workpiece (2) along the sawing channel (5) by means of at least one sawing device (4) of the dividing-up apparatus (1), wherein before execution of the trimming cut (21), at least one length (9) of the workpiece (2), resting on the machine table (3) and to be trimmed, is determined in feed direction (7) by means of at least one length measuring device, **characterized in that** the workpiece (2), to be trimmed, is on the at least one machine table (3) of the dividing-up apparatus (1) transported in the feed direction (7) to at least one saw chancel (5), arranged in the machine table (3), by means of the at least one feed device (6) of the dividing-up apparatus (1).

8. A method according to claim 7, **characterized in that** to execute the trimming cut (21), the sawing device (4) and the feed device (6) are controlled by a regulating device (8) of the dividing-up apparatus (1) depending on the length (9) determined by means of the length measuring device.

9. A method according to claim 7 or 8, **characterized in that** at least one suggestion for executing the trimming cut (21) is output by a regulating device (8) of the dividing-up apparatus (1) on a output unit (10) of the dividing-up apparatus (1) depending on the length (9) determined by the length measuring device.

10. A method according to any one of claims 7 to 9, **characterized in that** a difference (17) between the length (9) determined by means of the length measuring device and a desired length (16), specified and to be achieved in the feed direction (7) with the trimming, of the workpiece (2) is formed by a regulating device (8) of the dividing-up apparatus (1) and the type of trimming is executed or suggested depending on the difference (17).

11. A method according to claim 10, **characterized in that** to trim the workpiece (2), exclusively dust cuts, the width of which is less than a width of cut (18) of the sawing device (4), are executed or suggested when the difference (17) is less than or equal to a predeterminable minimum dimension.

12. A method according to claim 10 or 11, **characterized in that** when the difference (17) is less than or equal to twice the width of cut (18) of the sawing device (4) precisely one dust cut is executed or suggested at the front end (13), remote from the feed device (6), of the workpiece (2) and precisely one dust cut is executed or suggested at the rear end (14), facing the feed device (6), of the workpiece (2),

13. A method according to any one of claims 10 to 12, **characterized in that** when the difference (17) is less than the sum of twice the width of cut (18) of the sawing device (4) and a predeterminable minimum width (19) of a residual strip (20), a plurality of dust cuts are executed or suggested at the front end (13), remote from the feed device (6), of the workpiece (2) and precisely one dust cut is executed or suggested at the rear end (14), facing the feed device (6), of the workpiece (2).

14. A method according to any one of claims 10 to 13, **characterized in that** to trim the workpiece (2), the sawing off of at least one residual strip (20) from the workpiece (2) is only executed or suggested when the difference (17) is greater than a predeterminable minimum dimension.

15. A method according to any one of claims 10 to 14, **characterized in that** when the difference (17) is greater than or equal to the sum of twice the width of cut of the sawing device (4) and a predeterminable minimum width (19) of a residual strip (20), at the front end (13), remote from the feed device (6), of the workpiece (2) there is executed or suggested the sawing off of at least one residual strip (20) from the workpiece (2) and at the rear end (14), facing the feed device (6), of the workpiece (2) there is executed or suggested precisely one dust cut.

## Revendications

1. Installation de séparation (1) pour le sciage d'au moins une pièce (2) en forme de plaque ou bloc qui présente au moins une table de machine (3) pour le placement de la pièce (2) à scier sur la table de machine (3) et au moins un dispositif de sciage (4), l'installation de séparation (1) présentant au moins un dispositif d'avancement (6) pour le transport de la pièce (2) sur la table de machine (3) dans un sens d'avancement (7) et au moins un dispositif de régulation (8) pour la commande du dispositif de sciage (4) et du dispositif d'avancement (6), l'installation de séparation (1) présentant au moins un dispositif de mesure de longueur pour la détermination d'au moins une longueur (9) de la pièce (2) reposant sur la table de machine (3) dans le sens d'avancement (7), la longueur (9) déterminée par le dispositif de mesure de longueur pouvant être transmise au dispositif de régulation (8), **caractérisée en ce que** le dispositif de sciage (4) est logé de manière coulissante le long d'un canal de sciage (5) s'étendant en particulier linéairement et disposé dans la table de machine (3).

2. Installation de séparation (1) selon la revendication 1, **caractérisée en ce que** le dispositif de régulation (8) commande le dispositif de sciage (4) et le dispositif d'avancement (6) pour la réalisation au moins d'un délignage (21) en fonction de la longueur (9) déterminée par le dispositif de mesure de longueur.

3. Installation de séparation (1) selon la revendication 1 ou 2, **caractérisée en ce que** l'installation de séparation (1) présente une unité de sortie (10) et le dispositif de régulation (8) émet, en fonction de la longueur (9) déterminée par le dispositif de mesure de longueur, sur l'unité de sortie (10) au moins une proposition pour la réalisation d'au moins un délignage (21).

4. Installation de séparation (1) selon l'une quelconque des revendications 1 à 3, **caractérisée en ce que** le dispositif de mesure de longueur présente un dispositif de détermination de position (11) pour la détermination de la position du dispositif d'avancement (6) dans le sens d'avancement (7) et au moins un dispositif de détection (12) pour la détermination de la position d'une extrémité avant (13) éloignée du dispositif d'avancement (6) de la pièce (2) dans le sens d'avancement (7).

5. Installation de séparation (1) selon la revendication 4, **caractérisée en ce que** le dispositif de détection (12) est disposé, vu dans le sens d'avancement (7), fixement de préférence dans ou avant le canal de sciage (5).

6. Installation de séparation (1) selon la revendication 4 ou 5, **caractérisée en ce que** le dispositif de détection (12) est un capteur de lumière fonctionnant en se basant de préférence sur le principe de réflexion.

7. Procédé de délignage au moins d'une pièce (2) en forme de plaque ou bloc à l'aide d'une installation de séparation (1) selon l'une quelconque des revendications 1 à 6, la pièce (2) à déligner étant transportée sur au moins une table de machine (3) de l'installation de séparation (1) à l'aide au moins d'un dispositif d'avancement (6) de l'installation de séparation (1) dans un sens d'avancement (7) et au moins un délignage (21) étant réalisé à l'aide au moins d'un dispositif de sciage (4) de l'installation de séparation (1) le long du canal de sciage (5) sur la pièce (2), avant la réalisation du délignage (21) étant déterminée au moins une longueur (9) de la pièce (2) à déligner reposant sur la table machine (3) dans le sens d'avancement (7) à l'aide d'au moins un dispositif de mesure de longueur, **caractérisé en ce que** la pièce (2) à déligner est transportée sur l'au moins une table de machine (3) de l'installation de séparation (1) à l'aide de l'au moins un dispositif d'avancement (6) de l'installation de séparation (1) dans le sens d'avancement (7) vers au moins un canal de sciage (5) disposé dans la table de machine (3).

8. Procédé selon la revendication 7, **caractérisé en ce que**, pour la réalisation du délignage (21), le dispositif de sciage (4) et le dispositif d'avancement (6) sont commandés par un dispositif de régulation (8) de l'installation de séparation (1) en fonction de la longueur (9) déterminée à l'aide du dispositif de mesure de longueur.

9. Procédé selon la revendication 7 ou 8, **caractérisée en ce qu'**au moins une proposition de réalisation du délignage (21) est émise par un dispositif de régulation (8) de l'installation de séparation (1) en fonction de la longueur (9) déterminée par le dispositif de mesure de longueur sur une unité de sortie (10) de l'installation de séparation (1).

10. Procédé selon l'une quelconque des revendications 7 à 9, **caractérisé en ce qu'**une différence (17) entre la longueur (9) déterminée à l'aide du dispositif de mesure de longueur et une longueur de consigne (16) de la pièce (2) prescrite à atteindre avec le délignage dans le sens d'avancement (7) est formée par un dispositif de régulation (8) de l'installation de séparation (1) et le type de délignage est réalisé ou proposé en fonction de la différence (17).

11. Procédé selon la revendication 10, **caractérisé en ce que** pour le délignage de la pièce (2), exclusivement des coupes de sciure, dont la largeur est inférieure à une largeur de coupe (18) du dispositif de sciage (4), sont réalisées ou proposées si la différence (17) est inférieure ou identique à une mesure minimale prescriptible.

12. Procédé selon la revendication 10 ou 11, **caractérisé en ce que** précisément une coupe de sciure est réalisée ou proposée sur l'extrémité (13) avant éloignée du dispositif d'avancement (6) de la pièce (2) et précisément une coupe de sciure est réalisée ou proposée sur l'extrémité arrière (14) tournée vers le dispositif d'avancement (6) de la pièce (2) si la différence (17) est inférieure ou identique à la double largeur de coupe (18) du dispositif de sciage (4).

13. Procédé selon l'une quelconque des revendications 10 à 12, **caractérisé en ce que** plusieurs coupes de sciure sont réalisées ou proposées sur l'extrémité (13) avant éloignée du dispositif d'avancement (6) de la pièce (2) et précisément une coupe de sciure est réalisée ou proposée sur l'extrémité (14) arrière tournée vers le dispositif d'avancement (6) de la pièce (2) si la différence (17) est inférieure à la somme de la double largeur de coupe (18) du dispositif de sciage (4) et d'une largeur minimale prescriptible (19) d'une bande résiduelle (20).

14. Procédé selon l'une quelconque des revendications 10 à 13, **caractérisé en ce que** seul le sciage d'au moins une bande résiduelle (20) de la pièce (2) est réalisé ou proposé pour le délignage de la pièce (2) lorsque la différence (17) est supérieure à une mesure minimale prescriptible.

15. Procédé selon l'une quelconque des revendications 10 à 14, **caractérisé en ce que** sur l'extrémité (13) avant éloignée du dispositif d'avancement (6) de la pièce (2), le sciage au moins d'une bande résiduelle (20) de la pièce (2) est réalisé ou proposé et sur l'extrémité arrière (14) tournée vers le dispositif d'avancement (6) de la pièce (2), précisément une coupe de sciure est réalisée ou proposée si la différence (17) est supérieure ou identique à la somme de la double largeur de coupe du dispositif de sciage (4) et d'une largeur minimale prescriptible (19) d'une bande résiduelle (20).
